# EUROPÄISCHE PATENTSCHRIFT

(11) **EP 2 113 396 B1**
(45) Veröffentlichungstag und Bekanntmachung des Hinweises auf die Patenterteilung: **26.01.2011**
(21) Anmeldenummer: 09158434.2
(22) Anmeldetag: 22.04.2009
(51) Int. Cl.: B60B 33/00, A01D 89/00, A01B 73/00

(54) **Stützradanordnung für einen Schwadaufnehmer mit selbsttätiger Arretierung in der Transportstellung**
Support wheel assembly for a swath pick-up with self-actuated retainer in transport position
Ensemble de roue d'appui pour un ramasseur doté d'un blocage automatique en position de transport

(30) Priorität: 29.04.2008 DE 102008001459
(43) Veröffentlichungstag der Anmeldung: 04.11.2009
(73) Patentinhaber: Maschinenfabrik Kemper GmbH & Co. KG, 48703 Stadtlohn (DE)
(72) Erfinder: Schmöning, Christoph, 45721, Haltern am See (DE)
(74) Vertreter: Holst, Sönke

(56) Entgegenhaltungen:
- EP-A- 1 048 195
- DE-U1- 29 713 081
- US-A- 3 771 302

## Beschreibung

Die Erfindung betrifft eine Stützradanordnung für einen Schwadaufnehmer, mit:
einem Stützradzusammenbau, der eine Achse und eine auf der Achse drehbar abgestützte Felge mit einem Reifen umfasst, und
einem Arm, der mit der Achse des Stützradzusammenbaus und mit einem Schwenkbolzen verbunden ist, welcher um eine sich zumindest näherungsweise vertikal erstreckende Schwenkachse drehbar in einer Lagerbuchse gelagert ist,
wobei die Lagerbuchse gemeinsam mit dem Schwadaufnehmer in vertikaler Richtung zwischen einer abgesenkten Erntestellung und einer angehobenen Transportstellung bewegbar ist.

### Stand der Technik

Schwadaufnehmer werden in der Landwirtschaft verwendet, um auf einem Feld liegendes Gut, das in der Regel zuvor getrocknet und in einem Schwad abgelegt wurde, aufzunehmen und einer Erntemaschine zuzuführen, in der es zu einem Ballen gepresst (Ballenpresse), - ggf. nach einem Schneidvorgang - zum Abtransport abgelegt (Ladewagen), gehäckselt (Feldhäcksler) oder ausgedroschen (Mähdrescher) wird. Derartige Schwadaufnehmer weisen üblicherweise sich auf einer Kreisbahn bewegende Zinken auf, die sich durch zwischen Abstreifblechen erstreckende Schlitze nach außen erstrecken, das Erntegut aufsammeln und einer Querförderschnecke übergeben, die es zusammenführt und an einen Einzugskanal der Erntemaschine übergibt.

Die Schwadaufnehmer umfassen um vertikale Schwenkachsen frei drehbar am Rahmen des Schwadaufnehmers angelenkte Stützräder, die das Gewicht des Schwadaufnehmers zumindest zum Teil auf dem Erdboden abstützen, so dass der Rahmen des Schwadaufnehmers den Bodenkonturen folgt. Im Erntebetrieb befinden sich die Drehachsen der Stützräder rückwärtig der vertikalen Schwenkachsen und sind außerhalb des Rahmens des Schwadaufnehmers seitlich neben den mit den das Erntegut aufnehmenden Zinken positioniert, um die Zinken möglichst exakt der Bodenkontur folgen zu lassen. Bei einer Transportfahrt verbleibt der Schwadaufnehmer in der Regel an der Vorderseite der Erntemaschine angebracht und wird angehoben. Die Stützräder werden dann an die Vorderseite des Schwadaufnehmers verschwenkt, indem sie um die vertikale Schwenkachse gedreht werden, sei es von Hand oder durch Hydraulikzylinder (s. DE 199 19 309 A), und haben dann keinen Bodenkontakt mehr.

In der Transportstellung können die Stützräder um die Schwenkachse frei rotieren, so dass sie störende Schwingbewegungen durchführen, wenn sie nicht arretiert werden. Eine manuelle Arretierung hat den Nachteil, dass der Bediener in zeitaufwändiger Weise zur Aktivierung der Arretierung aus seiner Kabine herabsteigen und anschließend wieder hinaufsteigen muss. Die zweite Ausführungsform der DE 199 19 309 A mit der nach hinten ansteigenden Schwenkachse spannt das Rad zwar durch die Schwerkraft nach hinten vor, bewirkt aber keine wirkliche Arretierung, da es immer noch um die Schwenkachse drehen kann. Eine Arretierung des Rads um die Hochachse mittels eines separaten, fremdkraftbetätigten Aktors, der von der Kabine der Erntemaschine aus fernbetätigbar ist, wäre zwar denkbar, aber recht aufwändig.

### Aufgabe

Das der Erfindung zu Grunde liegende Problem wird darin gesehen, eine Stützradanordnung für einen Schwadaufnehmer bereitzustellen, die auf einfache, aber keine manuelle Einwirkung durch den Bediener erfordernde Weise eine Arretierung des Stützrads in dessen Transportposition ermöglicht.

Dieses Problem wird erfindungsgemäß durch die Lehre des Patentanspruchs 1 gelöst, wobei in den weiteren Patentansprüchen Merkmale aufgeführt sind, welche die Lösung in vorteilhafter Weise weiterentwickeln.

Eine Stützradanordnung umfasst einen Stützradzusammenbau, der sich aus einer Achse und einer auf der Achse (vorzugsweise mittels einer Nabe) drehbar abgestützten Felge aufbaut, auf der ein in der Regel luftgefüllter Reifen sitzt. Die Achse des Stützradzusammenbaus ist mit wenigstens einem Arm verbunden, der an seinem oberen Ende mit einem Schwenkbolzen gekoppelt ist. Es ist auch selbstverständlich möglich, den Schwenkbolzen durch zwei, eine Gabel bildende Arme mit der Achse des Stützradzusammenbaus zu verbinden. Der Schwenkbolzen ist in einer ihn aufnehmenden Lagerbuchse um eine zumindest näherungsweise vertikal verlaufende Schwenkachse drehbar gelagert, so dass der Stützradzusammenbau frei um die Hochachse rotieren und den Lenkbewegungen der Erntemaschine folgen kann, wobei die Achse des Stützradzusammenbaus im Erntebetrieb rückwärtig der vertikal verlaufenden Schwenkachse angeordnet ist, um die der Schwenkbolzen gegenüber der Lagerbuchse rotiert. Der Schwenkbolzen ist gegenüber der Lagerbuchse in axialer Richtung beweglich gelagert und umfasst einen radial nach außen überstehenden, starr mit dem Schwenkbolzen verbundenen Zapfen, der sich oberhalb der oberen Kante der Lagerbuchse befindet. Die obere Kante der Lagerbuchse ist gegenüber den Längsachsen des Schwenkbolzens und der Lagerbuchse in einem nicht-rechtwinkligen Winkel (d. h. einem Winkel, der größer als 0° und kleiner als 90° ist und vorzugsweise zwischen 10° und 80° liegt) und gegenüber der Horizontalen geneigt angeordnet.

Auf diese Weise erreicht man, dass der Zapfen - wegen der Wirkung der Schwerkraft und der axialen Beweglichkeit des Schwenkbolzens gegenüber der Lagerbuchse - zur Anlage an der oberen Kante der Lagerbuchse kommt, wenn der Schwadaufnehmer in eine gegenüber der Erntestellung angehobene Transportstellung verbracht wird. Der Stützradzusammenbau und der Schwenkbolzen ziehen den Zapfen durch die Wirkung der Schwerkraft nach unten, so dass der Zapfen an der geneigten oberen Kante der Lagerbuchse entlang gleitet, bis er in seine tiefstmögliche Stellung gelangt. Dabei drehen sich der Schwenkbolzen und der Stützradzusammenbau um die Schwenkachse in seine Transportposition, insofern der Stützradzusammenbau sich nicht schon vor dem Anheben des Schwadaufnehmers dort befunden hat. Somit wird der Stützradzusammenbau beim Anheben des Schwadaufnehmers selbsttätig und ohne zusätzliche Aktoren in seine Transportposition verbracht und dort arretiert.

Am tiefsten Punkt der oberen Kante der Lagerbuchse kann eine nach unten gerichtete Vertiefung oder Einbuchtung angeordnet sein, um den Zapfen und somit den Stützradzusammenbau wirksam zu arretieren.

Befindet sich der Schwadaufnehmer in seiner abgesenkten Emteposition, begrenzt der Zapfen den Winkelbereich des Schwenkbolzens um die Schwenkachse in einer bevorzugten Ausführungsform der Erfindung nicht.

Der erfindungsgemäße Schwadaufnehmer kann an beliebigen landwirtschaftlichen Erntemaschinen verwendet werden, beispielsweise Feldhäckslern, Ladewagen, Mähdreschern oder Ballenpressen.

### Ausführungsform

In den Zeichnungen ist ein nachfolgend näher beschriebenes Ausführungsbeispiel der Erfindung dargestellt. Es zeigt:
- Fig. 1: eine Seitenansicht eines Feldhäckslers mit einem Schwadaufnehmer,
- Fig. 2: eine perspektivische Ansicht der Stützradanordnung des Schwadaufnehmers in der Emtestellung,
- Fig. 3: eine perspektivische Ansicht der Stützradanordnung des Schwadaufnehmers in der Transportstellung,
- Fig. 4: eine Schnittzeichnung durch die Lagerbuchse und den Schwenkbolzen in der Emteposition des Stützradzusammenbaus, und
- Fig. 5: eine Schnittzeichnung durch die Lagerbuchse und den Schwenkbolzen in der Transportposition des Stützradzusammenbaus.

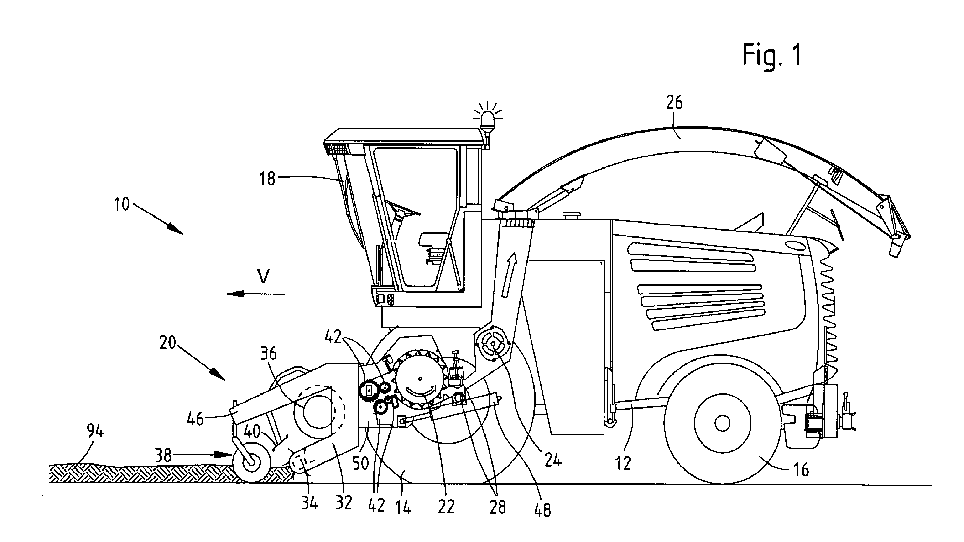

In der Figur 1 ist eine Erntemaschine 10 in der Art eines selbstfahrenden Feldhäckslers dargestellt. Die Erntemaschine 10 baut sich auf einem Rahmen 12 auf, der von vorderen angetriebenen Rädern 14 und lenkbaren rückwärtigen Rädern 16 getragen wird. Die Bedienung der Erntemaschine 10 erfolgt von einer Fahrerkabine 18 aus, von der aus ein Erntevorsatz in Form eines Schwadaufnehmers 20 einsehbar ist. Mittels des Schwadaufnehmers 20 vom Boden aufgenommenes Erntegut, z. B. Gras oder dergleichen, wird über einen Einzugsförderer 42 mit Vorpresswalzen, die innerhalb eines Einzugsgehäuses 50 an der Frontseite des Feldhäckslers 10 angeordnet sind, einer Häckseltrommel 22 zugeführt, die es in kleine Stücke häckselt und es einer Fördervorrichtung 24 aufgibt. Das Gut verlässt die Erntemaschine 10 zu einem nebenher fahrenden Anhänger über einen um eine etwa vertikale Achse drehbaren und in der Neigung verstellbaren Austragschacht 26. Zwischen der Häckseltrommel 22 und der Fördervorrichtung 24 erstreckt sich eine Nachzerkleinerungsvorrichtung 28 mit zwei Körnerprozessorwalzen, durch die das zu fördernde Gut der Fördervorrichtung 24 tangential zugeführt wird.

Der Schwadaufnehmer 20 ist als so genannte Pick-Up ausgebildet. Der Schwadaufnehmer 20 baut sich auf einem Rahmengestell 32 auf und stützt sich über beidseitig angebrachte Stützradzusammenbauten 38, die über je einen Träger 46 am Rahmengestell 32 befestigt sind, auf dem Erdboden ab. Die Aufgabe des Schwadaufnehmers 20 besteht darin, auf dem Boden eines Felds verstreut oder in einem Schwad 94 abgelegtes Erntegut aufzunehmen und es der Erntemaschine 10 zur weiteren Bearbeitung zuzuführen. Hierzu wird der Schwadaufnehmer 20 während des Erntebetriebes mit einem konstanten Auflagedruck über das Feld bewegt, während er zum Transport auf einer Strasse oder auf Wegen mittels eines Hydraulikzylinders 48 angehoben wird, welcher das Einzugsgehäuse 50 und den daran befestigten Schwadaufnehmer 20 um die Drehachse der Häckseltrommel 22 verschwenkt. Der Hydraulikzylinder 48 dient auch zur Einstellung der Höhe des Schwadaufnehmers 20 über dem Boden, bzw. zur Einstellung des Auflagedrucks der Stützradzusammenbauten 38 auf dem Erdboden. Zum Schwadaufnehmer 20 gehört ein Abgabeförderer 36 in Form einer Förderschnecke, die das aufgenommene Gut von den Seiten des Schwadaufnehmers 20 zu einer in der Mitte gelegenen, nicht gezeigten Abgabeöffnung fördert, hinter der der Einzugsförderer 42 folgt. Der Schwadaufnehmer 20 weist auch einen (wie der Abgabeförderer 36) rotativ angetriebenen Aufnehmerrotor 34 auf, der unterhalb des Abgabeförderers 36 angeordnet ist und mit seinen Zinken das Gut vom Erdboden anhebt, um es dem Abgabeförderer 36 zu übergeben. Außerdem ist ein Niederhalter 40 in Form eines über dem Aufnehmerrotor 34 angeordneten Bleches am Gehäuse 32 befestigt.

Im Folgenden beziehen sich Richtungsangaben, wie seitlich, unten und oben, auf die Vorwärtsrichtung V des Schwadaufnehmers 20, die in den Figuren nach links verläuft.

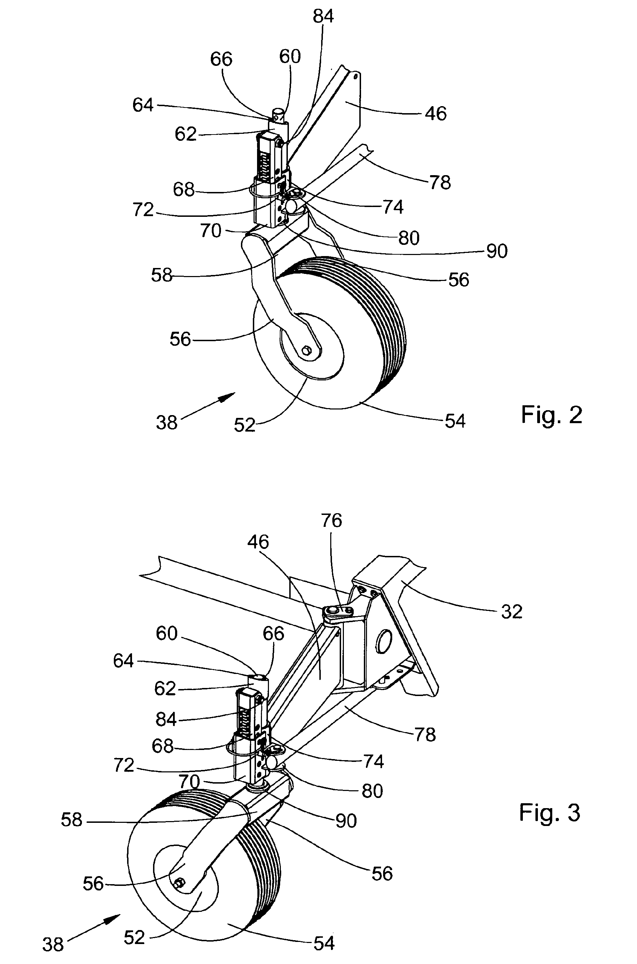

Die Figur 2 zeigt die in Vorwärtsrichtung V linke Stützradanordnung mit dem Stützradzusammenbau 38 detaillierter. Der Stützradzusammenbau 38 umfasst eine Felge 52 mit einer zentrisch angeordneten Nabe, gegenüber der eine mittige Achse (in den Figuren nicht erkennbar) drehbar gelagert ist. Auf die Felge 52 ist ein luftgefüllter Reifen 54 aufgezogen. Die Achse ist an ihren beiden Enden mit zwei sich schräg nach oben erstreckenden Armen 56 verschraubt, die durch einen oberen Querträger 58 verbunden sind, so dass sie eine Gabel bilden. An der Oberseite des Querträgers 58 ist ein kreiszylindrischer, rohrförmiger Schwenkbolzen 60 angeschweißt oder auf beliebige andere Weise befestigt, der sich durch den Innenraum einer zu ihm koaxialen Lagerbuchse 62 vertikal nach oben erstreckt. Oberhalb der oberen Kante 64 der Lagerbuchse 62 ist der Schwenkbolzen 60 mit einem radial nach außen überstehenden Zapfen 66 starr verbunden, der in der dargestellten Ausführungsform eine in ein Gewinde im Schwenkbolzen 60 eingeschraubte Schraube mit zylindrischem Kopf und Innensechskant ist. Die obere Kante 64 bildet insgesamt eine plane, aber gegenüber der Horizontalen geneigte Fläche, da sie gegenüber den Längsachsen des Schwenkbolzens 60 und der Lagerbuchse 62 in einem nicht-rechtwinkligen Winkel α, der größer als 0° und kleiner als 90° ist und vorzugsweise zwischen 10° und 80° liegt, angeordnet ist. In der dargestellten Ausführungsform beträgt der Winkel α etwa 45°. Am tiefsten Punkt der oberen Kante 64 der Lagerbuchse 62 ist eine nach unten gerichtete Vertiefung oder Einbuchtung 96 angeordnet, um den Zapfen 66 und somit den Stützradzusammenbau 38 wirksam in der Transportposition zu arretieren, wie unten beschrieben.

Die Lagerbuchse 62 ist über eine Lasche 82 und einen Bolzen 84 mit einem sich vertikal erstreckenden Element 68 verbunden, das sich wiederum innerhalb eines Halteelements 70 in vertikaler Richtung verschiebbar gelagert ist. Durch einen steckbaren Bolzen 72, der durch eine Bohrung im Halteelement 70 und eine von mehreren, übereinander angeordneten Bohrungen im Element 68 hindurch steckbar ist, kann das Element 68 und mit ihm die Lagerbuchse 62 in unterschiedlichen Höhen gegenüber dem Halteelement 70 arretiert werden. Das Halteelement 70 ist wiederum über ein die Lagerbuchse 62 umschließendes Rohr 74, gegenüber dem die Lagerbuchse 62 höhenbeweglich ist, mit dem Träger 46 verbunden. Der Träger 46 ist durch eine gabelförmige Schwenklagerung 76 (s. Figur 3) mit dem Rahmengestell 32 um die Hochachse schwenkbar verbunden. Ein fremdkraftbetätigter Aktor 78 in Form eines doppeltwirkenden Hydraulikzylinders ist mit einem Ende am Rahmengestell 32 und mit dem anderen Ende an einer Konsole 80 angelenkt, die mit dem Haltelement 70 und/oder dem Rohr 74 verschweißt oder auf beliebige andere Weise verbunden ist. Der Aktor 78 ist aus der Kabine 18 fembetätigbar und zu diesem Zweck mit der Hydraulik der Erntemaschine 10 verbunden.

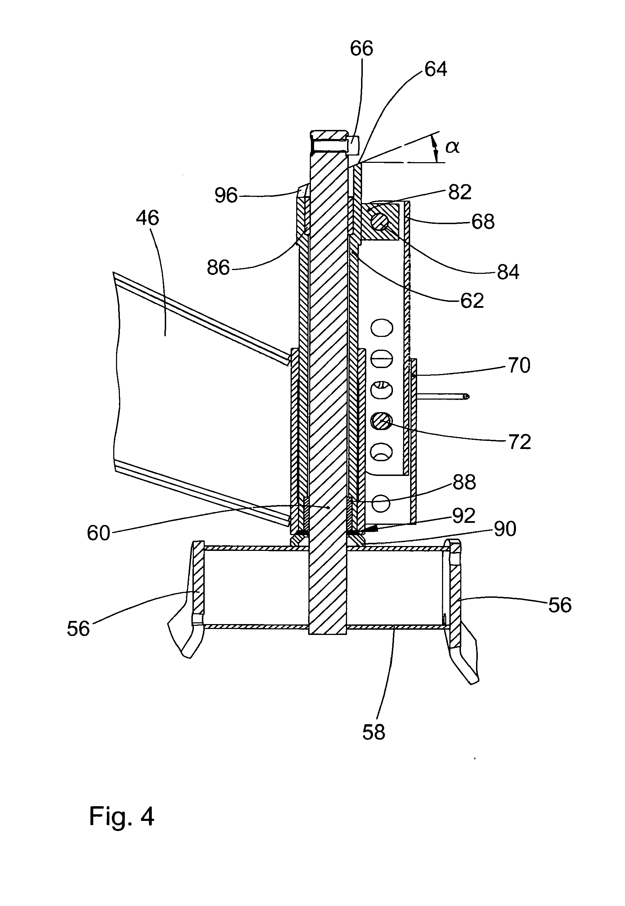

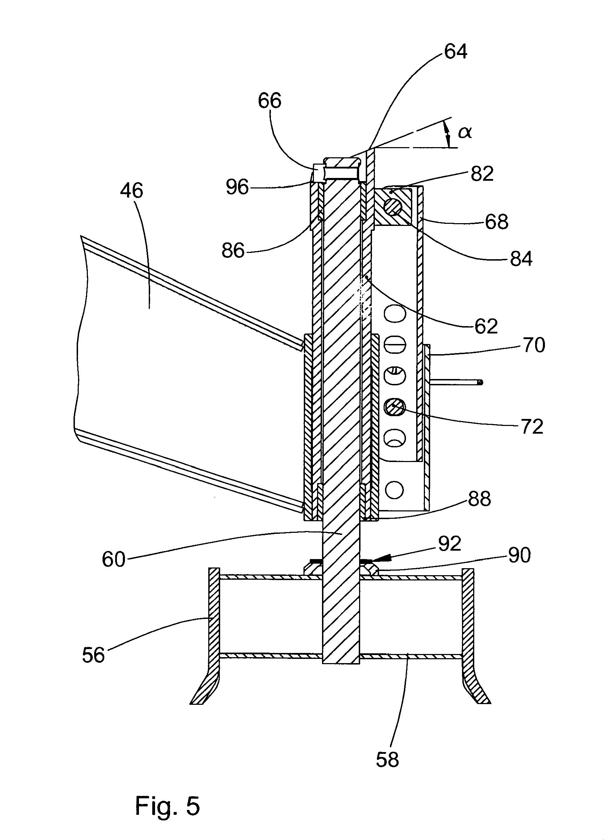

Anhand der Figuren 4 und 5 ist erkennbar, dass zwischen der Lagerbuchse 62 und dem Schwenkbolzen 60 Lagerhülsen 86, 88 angeordnet sind, die vorzugsweise aus Messing bestehen. Eine Lagerhülse 86 befindet sich unmittelbar unterhalb der oberen Kante 64 der Lagerbuchse 62 und die andere Lagerhülse 88 ist am unteren Ende der Lagerbuchse 62 angeordnet. Beide Lagerhülsen 86, 88 sind fest an der Lagerbuchse 62 angebracht, so dass der Schwenkbolzen 60 gegenüber den Lagerhülsen 86, 88 um seine Längsachse drehbar und in seiner axialen Richtung verschiebbar ist. An der Oberseite des Querträgers 58 ist eine gehärtete Scheibe 90 angeordnet, die den Schwenkbolzen 60 umschließt, während sich an der Unterseite der Lagerbuchse 62 eine weitere, den Schwenkbolzen 60 umschließende, gehärtete Scheibe 92 befindet.

Die Funktionsweise der Stützradanordnungen des Schwadaufnehmers 20 ist Folgende.

Im normalen Erntebetrieb sind die Aktoren 78 eingezogen, so dass sich die Stützradzusammenbauten 38 seitlich neben dem Aufnehmerrotor 34 befinden, wie in den Figuren 1 und 2 dargestellt. Die Stützradzusammenbauten 38 werden mit einer durch den (mittels der Hydraulikzylinder 48 eingestellten) Auflagedruck des Schwadaufnehmers 20 bedingten Kraft belastet, die nach unten gerichtet ist. Daher befinden sich die Schwenkbolzen 60 gegenüber den Lagerbuchsen 62 in der in den Figuren 2 und 4 dargestellten Stellung, in der sich die Zapfen 66 im Abstand oberhalb der oberen Kante 64 der Lagerbuchsen 62 befinden. Die Stützradzusammenbauten 38 stützen sich über die gehärteten Scheiben 90, 92 an den Lagerbuchsen 62 ab und die Kräfte werden von den Stützradzusammenbauten 38 über die Arme 56, die Querträger 58, die Lagerbuchsen 62, die Laschen 82, die Bolzen 84, die Elemente 68, die Bolzen 72 und die Halteelemente 70 auf die Träger 46 (bzw. in umkehrter Richtung) übertragen.

Vor einer Straßenfahrt werden die Aktoren 78 ausgefahren. Dadurch werden die Träger 46 um die Schwenklagerungen 76 nach innen geschwenkt, so dass die in Figur 3 dargestellte Stellung erreicht wird, wobei die Stützradzusammenbauten 38 aber zunächst gegenüber der in Figur 3 dargestellten Stellung um 180° gedreht sind, da sie vorerst im Bodenkontakt bleiben. (Die in Figur 3 dargestellte Stellung der Stützradzusammenbauten 38 wird nur erreicht, nachdem der Schwadaufnehmer 20 angehoben wurde, wie weiter unten erläutert.) Werden nun das Einzugsgehäuse 50 und der Schwadaufnehmer 20 mittels der Hydraulikzylinder 48 angehoben, kommt der Zapfen 66 an der in Figur 5 rechts eingezeichneten, höchsten Stelle der oberen Kante 64 der Lagerbuchse 62 zur Anlage. Die auf die Stützradzusammenbauten 38 und den Schwenkbolzen 60 einwirkende Schwerkraft zieht den Zapfen 66 nach unten, sodass er an der Kante 64 nach unten gleitet. Dabei dreht sich der Schwenkbolzen 60 um 180° um seine eigene Achse, wie auch der Stützradzusammenbau 38 sich um die Hochachse dreht und in die Stellung gemäß Figur 3 und 5 gelangt, in der die Stützradzusammenbauten 38 quer zur Vorwärtsrichtung V nach innen orientiert sind und ihre Transportposition einnehmen, wobei der Zapfen 66 sich in der Einbuchtung 96 befindet. Nun ist der Schwadaufnehmer 20 für eine Straßenfahrt vorbereitet und die Stützradzusammenbauten 38 sind in ihrer Transportposition arretiert. Wird der Schwadaufnehmer 20 anschließend wieder mittels des Hydraulikzylinders 48 abgesenkt, nimmt der Schwenkbolzen 60 wieder die in Figur 4 dargestellte Stellung ein, in der der Zapfen 66 sich im Abstand oberhalb der Kante 64 befindet und die Aktoren 78 die Rahmen 46 nach außen bewegen können, ohne dass die Stützradzusammenbauten 38 größere Lenkbewegungen vollführen oder gar blockieren würden.

## Patentansprüche

1. Stützradanordnung für einen Schwadaufnehmer (20), mit:
einem Stützradzusammenbau (38), der eine Achse und eine auf der Achse drehbar abgestützte Felge (52) mit einem Reifen (54) umfasst, und
einem Arm (56), der mit der Achse des Stützradzusammenbaus (38) und mit einem Schwenkbolzen (60) verbunden ist, welcher um eine sich zumindest näherungsweise vertikal erstreckende Schwenkachse drehbar in einer Lagerbuchse (62) gelagert ist,
wobei die Lagerbuchse (62) gemeinsam mit dem Schwadaufnehmer (20) in vertikaler Richtung zwischen einer abgesenkten Erntestellung und einer angehobenen Transportstellung bewegbar ist,
**dadurch gekennzeichnet, dass** der Schwenkbolzen (60) gegenüber der Lagerbuchse (62) in axialer Richtung beweglich gelagert und starr mit einem vom Schwenkbolzen (60) radial nach außen überstehenden, oberhalb einer oberen Kante (64) der Lagerbuchse (62) angeordneten Zapfen (66) verbunden ist,
und dass obere Kante (64) der Lagerbuchse (62) gegenüber den Längsachsen des Schwenkbolzens (60) und der Lagerbuchse (62) in einem nicht-rechtwinkligen Winkel (α) angeordnet ist, sodass der Zapfen (66) bei in die angehobene Transportstellung verbrachtem Schwadaufnehmer (20) entlang der oberen Kante (64) der Lagerbuchse (62) nach unten gleiten und den Stützradzusammenbau (38) in eine Transportposition drehen und dort arretieren kann.

2. Stützradanordnung nach Anspruch 1, **dadurch gekennzeichnet, dass** am tiefsten Punkt der oberen Kante (64) der Lagerbuchse (62) eine nach unten gerichtete Einbuchtung (96) angeordnet ist.

3. Stützradanordnung nach Anspruch 1 oder 2, **dadurch gekennzeichnet, dass** der Zapfen (66) bei in der abgesenkten Erntestellung befindlichem Schwadaufnehmer (20) die Drehung des Schwenkbolzens (60) um die Schwenkachse nicht begrenzt.

4. Stützradanordnung nach einem der Ansprüche 1 bis 3, **dadurch gekennzeichnet, dass** die Lagerbuchse (62) an einem Halteelement (70) befestigt ist, welches gegenüber einem Rahmengestell (32) des Schwadaufnehmers (20) um eine sich zumindest näherungsweise vertikal erstreckende Achse zwischen einer Erntestellung und einer Transportstellung verschwenkbar ist.

5. Stützradanordnung nach Anspruch 4, **dadurch gekennzeichnet, dass** das Halteelement (70) mittels eines fremdkraftbetätigten Aktors (78) zwischen der Erntestellung und der Transportstellung bewegbar ist.

6. Stützradanordnung nach Anspruch 4 oder 5, **dadurch gekennzeichnet, dass** die Lagerbuchse (62) gegenüber dem Halterelement (70) höhenverstellbar ist.

7. Schwadaufnehmer (20) mit einer Stützradanordnung nach einem der vorhergehenden Ansprüche.

8. Landwirtschaftliche Erntemaschine (10), vorzugsweise in der Art eines Feldhäckslers, eines Ladewagens, eines Mähdreschers oder einer Ballenpresse, mit einem Schwadaufnehmer (20) nach Anspruch 7.

## Claims

1. Support wheel arrangement for a swath pick-up (20), with:
a support wheel assembly (38) which comprises an axle and a rim (52) which is supported rotatably on the axle and has a tyre (54), and
an arm (56) which is connected to the axle of the support wheel assembly (38) and to a pivot pin (60) which is mounted in a bearing bushing (62) in a manner such that it is rotatable about a pivot axis extending at least approximately vertically,
wherein the bearing bushing (62) can be moved together with the swath pick-up (20) in the vertical direction between a lowered harvesting position and a raised transport position,
**characterized in that** the pivot pin (60) is mounted movably in the axial direction in relation to the bearing bushing (62) and is rigidly connected to a journal (66) which protrudes radially outwards from the pivot pin (60) and is arranged above an upper edge (64) of the bearing bushing (62),
and **in that** the upper edge (64) of the bearing bushing (62) is arranged at an angle (α) other than a right angle in relation to the longitudinal axes of the pivot pin (60) and of the bearing bushing (62) such that, when the swath pick-up (20) is brought into the raised transport position, the journal (66) can slide downwards along the upper edge (64) of the bearing bushing (62) and can rotate the support wheel assembly (38) into a transport position and can retain said support wheel assembly there.

2. Support wheel arrangement according to Claim 1, **characterized in that** a downwardly directed niche (96) is arranged at the lowest point of the upper edge (64) of the bearing bushing (62).

3. Support wheel arrangement according to Claim 1 or 2, **characterized in that**, when the swath pick-up (20) is in the lowered harvesting position, the journal (66) does not restrict the rotation of the pivot pin (60) about the pivot axis.

4. Support wheel arrangement according to one of Claims 1 to 3, **characterized in that** the bearing bushing (62) is fastened to a retaining element (70) which can be pivoted in relation to a framework (32) of the swath pick-up (20) about an axis extending at least approximately vertically between a harvesting position and a transport position.

5. Support wheel arrangement according to Claim 4, **characterized in that** the retaining element (70) can be moved between the harvesting position and the transport position by means of an externally actuated actuator (78).

6. Support wheel arrangement according to Claim 4 or 5, **characterized in that** the bearing bushing (62) can be adjusted in height in relation to the retaining element (70).

7. Swath pick-up (20) with a support wheel arrangement according to one of the preceding claims.

8. Agricultural harvesting machine (10), preferably in the manner of a field chopper, a self-loading forage box, a combine harvester or a baler, with a swath pick-up (20) according to Claim 7.

## Revendications

1. Agencement de roue d'appui pour un ramasseur (20), comprenant :
un assemblage de roue d'appui (38), qui comprend un essieu et une jante (52) supportée à rotation sur l'essieu avec un pneu (54), et
un bras (56) qui est connecté à l'essieu de l'assemblage de roue d'appui (38) et à un boulon pivotant (60), qui est monté dans un manchon de palier (62) de manière à pouvoir tourner autour d'un axe de pivotement s'étendant au moins approximativement verticalement,
le manchon de palier (62) pouvant être déplacé conjointement avec le ramasseur (20) dans la direction verticale entre une position de récolte abaissée et une position de transport relevée,
**caractérisé en ce que** le boulon pivotant (60) est monté mobile dans la direction axiale par rapport au manchon de palier (62) et est connecté rigidement à un tourillon (66) disposé au-dessus d'une arête supérieure (64) du manchon de palier (62) et dépassant radialement vers l'extérieur depuis le boulon pivotant (60),
et **en ce que** l'arête supérieure (64) du manchon de palier (62) est disposée par rapport aux axes longitudinaux du boulon pivotant (60) et du manchon de palier (62) suivant un angle non droit (α), de sorte que le tourillon (66), lorsque le ramasseur (20) est amené dans la position de transport relevée, puisse glisser vers le bas le long de l'arête supérieure (64) du manchon de palier (62) et faire tourner et bloquer l'assemblage de roue d'appui (38) dans une position de transport.

2. Agencement de roue d'appui selon la revendication 1, **caractérisé en ce qu'**un renfoncement (96) orienté vers le bas est disposé au niveau du point le plus bas de l'arête supérieure (64) du manchon de palier (62).

3. Agencement de roue d'appui selon la revendication 1 ou 2, **caractérisé en ce que** le tourillon (66) ne limite pas la rotation du boulon pivotant (60) autour de l'axe de pivotement lorsque le ramasseur (20) se trouve dans la position de récolte abaissée.

4. Agencement de roue d'appui selon l'une quelconque des revendications 1 à 3, **caractérisé en ce que** le manchon de palier (62) est fixé à un élément de retenue (70) qui peut pivoter par rapport à un bâti (32) du ramasseur (20) autour d'un axe s'étendant au moins approximativement verticalement entre une position de récolte et une position de transport.

5. Agencement de roue d'appui selon la revendication 4, **caractérisé en ce que** l'élément de retenue (70) peut être déplacé au moyen d'un actionneur commandé par force extérieure (78) entre la position de récolte et la position de transport.

6. Agencement de roue d'appui selon la revendication 4 ou 5, **caractérisé en ce que** le manchon de palier (62) peut être réglé en hauteur par rapport à l'élément de retenue (70).

7. Ramasseur (20) comprenant un agencement de roue d'appui selon l'une quelconque des revendications précédentes.

8. Moissonneuse agricole (10), de préférence sous forme de faucheuse-hacheuse, de chargeuse, de moissonneuse-batteuse ou de presse à balle, comprenant un ramasseur (20) selon la revendication 7.
